# EUROPEAN PATENT SPECIFICATION

(11) **EP 3 587 883 B1**
(45) Date of publication and mention of the grant of the patent: **17.11.2021**
(21) Application number: 19181411.0
(22) Date of filing: 20.06.2019
(51) Int. Cl.: F16L 13/14, F16L 33/213

(54) **TUBE CONNECTION ASSEMBLY**
ROHRVERBINDUNGSANORDNUNG
ENSEMBLE DE RACCORDEMENT DE TUBES

(30) Priority: 26.06.2018 IT 201800006684
(43) Date of publication of application: 01.01.2020
(73) Proprietor: Tubiflex S.p.a., 10043 Orbassano (IT)
(72) Inventor: MONTACCHINI, Luca, 10043 Orbassano (IT)
(74) Representative: Robba, Pierpaolo

(56) References cited:
- WO-A1-2015/160502
- US-A- 5 127 157
- US-A1- 2017 314 716

## Description

### Technical Field

The present invention relates to a tube connection assembly, more particularly, though not exclusively, to a connection assembly of the type adapted to connect, in a tight-sealing manner, a flexible tube to an outer apparatus or plant by means of a connection device.

The present invention further relates to a method for assembling such connection assembly by connecting the connection device to the tube.

The present invention finds particular application in the field of industrial plants and in the automotive field and is intended, for example, for high-temperature and/or aggressive fluids.

### Prior Art

In various fields, for example in the field of industrial plants or in the automotive field, there exists the need of connecting tubes, for example flexible tubes, to corresponding fittings of plants or apparatus, by means of suitable connection devices.

Such tubes and connection devices are intended, for example, for carrying high-temperature (>> 200 °C) and/or aggressive fluids and must ensure tightness and mechanical sealing until a pressure causing burst of the tubes is reached. It is good practice that such burst does not occur at the fitting.

Conventional connection devices, such as, for example, the device described in the document US 2006108798, comprise a bushing, which is fitted onto an end portion of a tube to be connected, and a connector having a shaft which is inserted into this end portion. In order to connect the connection device to the tube, the bushing is then forced radially inwards, by pressing or clamping, thus compressing the end portion of the tube between the connector shaft and the bushing. In addition, a protrusion, for example an engagement tooth, is generally provided inside the bushing, said protrusion being adapted to be inserted into a corresponding recess or groove formed in the outer surface of the connector shaft, in order to prevent the tube from slipping off the connection device.

Such connection devices have the problem that the inner diameter of the shaft is smaller, in the beginning, than the internal diameter of the tube, or in any case is made smaller as a result of the operations of pressing or clamping the bushing, so that the connection causes a decrease in the maximum flow flowing through the tube.

A further drawback of known connection devices is related to the manufacturing complexity in the making of the inner protrusion of the bushing.

Another drawback is related to the non-axisymmetric operation of pressing or clamping the bushing, whereby the known connection devices thus obtained have performance deficiencies in terms of sealing.

Furthermore, the operations of pressing or clamping the bushing require specific, not low-cost machinery.

Document WO 2015/160502 A1 discloses a tube connection assembly comprising a hose, a ferrule and a stem. The hose comprises an inner surface, an intermediate reinforcement layer and a cover layer. At an end of the hose, a portion of intermediate reinforcement layer extends beyond the hose. The stem comprises a region including one or more external, annular ridges which may engage the intermediate reinforcement layer of the hose. More specifically, the ridges of the stem interdigitate or interlock with internal ridges of the ferrule, so that the intermediate reinforcement layer is gripped internally and externally by the axially offset ridges. The interdigitated ridges may move the intermediate reinforcement layer into radially-opposing grooves formed axially between the respective ridges, thereby moving the intermediate reinforcement layer into a substantially sinusoidal shape and providing a mechanical interlock.

Document US 2017/314716 A1 discloses a tube connection assembly comprising a hose, a ferrule and a fitting. The hose comprises a liner surrounded by a seamless fibre sleeve that extends beyond the end of the liner. The fitting comprises o-rings to further enable a seal between the fitting and hose liner.

Document US 5127157 A discloses a tube connection assembly comprising a hose, a nipple, with a nipple portion provided with axially spaced, externally projecting beads or ribs with rounded-off external surfaces, and a tubular sleeve-like member fixed to the nipple.

The main object of the present invention is to overcome the drawbacks of the prior art, by providing a connection assembly (connection device and tube to be connected) that does not limit the flow of fluid in the tube to be connected and is more performing in terms of sealing between the connection device and the tube to be connected.

A further object of the present invention is to make the manufacture of the connection device simpler and cheaper.

Another object of the present invention is to make the assembling of the connection assembly, that is the connection between the connection device and the tube to be connected, simpler, faster and cheaper.

These and other objects are achieved by the connection assembly and the method for assembling the connection assembly as claimed in the appended claims.

### Disclosure of the Invention

A connection assembly according to the invention comprises a connection device and a tubular member. The connection device comprises a bushing and a connector, preferably separate from the bushing, said connector comprising in turn a head, adapted to be coupled, in a known manner, with an outer apparatus or plant, and a tubular shaped shaft, preferably integral with the head, said shaft being adapted to be inserted into an end portion of the tubular member to be connected.

In a non-assembled configuration of the connection assembly, the shaft has an outer diameter smaller than or substantially equal to, preferably slightly smaller than, an inner diameter of the end portion of the tubular member, so as to facilitate insertion thereof into the tubular member. In an assembled configuration of the connection assembly, the shaft is expanded, at the end portion of the tubular member, i.e. it has an outer diameter larger than that in the non-assembled configuration, whereby the end portion is compressed between an inner surface of the bushing and an outer surface of the shaft.

Advantageously, in the assembled configuration, the shaft has an inner diameter substantially equal to the inner diameter of the end portion of the tubular member in the non-assemble configuration. This makes it possible not to limit the flow of fluid within the tubular member to be connected at the connection assembly, this avoiding the drawback of having to use tubular members with greater cross-section to compensate for the reduction in the flow of fluid, and thus making the solution according to the invention cheaper, lighter and more performing.

According to a further aspect of the invention, the tubular member is a tube, for example a non-metallic flexible tube, surrounded by a mesh preferably made of a metal material or textile fiber, for example synthetic fibers such as kevlar or polyester. Preferably, in the case of a tube surrounded by a mesh, the end portion of the tubular member has, at its end, a mesh portion of suitable length extending beyond the inner tube, and, advantageously, the connector shaft has a region facing outwards of the shaft and having a suitably rough surface, for example a knurled surface, so as to engage with the mesh portion extending beyond the tube. In this way, the mesh is trapped between the bushing and the rough surface of the shaft, thus contributing to prevent the tubular member from slipping off the connection device.

According to a further aspect of the invention, the inner surface of the bushing of the connection assembly advantageously has no inward protrusions and this makes manufacturing thereof easier.

The invention further relates to a kit comprising a connection assembly as described above and a drawing tool adapted to expand the shaft of the connection assembly.

The invention further relates to a method for assembling the connection assembly. The method comprises the steps of:
- fitting the bushing around the end portion of the tubular member;
- inserting a drawing tool into the tubular member;
- inserting the shaft of the connector into the end portion of the tubular member;
- expanding, by sliding of the drawing tool within the connector, the shaft of the connector, thus causing compression of the end portion of the tubular member between the outer surface of the shaft and the inner surface of the bushing.

The method described above makes it possible to assemble the connection assembly in an easy, fast and cheap way. In addition, advantageously, the expansion of the shaft of the connector, by sliding of the drawing tool within the connector, and the consequent compression of the end portion of the tubular member are axisymmetric deformations which ensure to obtain a connection assembly in an assembled configuration which is more performing in terms of sealing between the connection assembly and the tube to be connected.

Optionally, in the case where the tubular member is a tube with an outer mesh and the shaft of the connector comprises the region with the rough surface, the method includes the additional steps of:
- providing, at an end of the end portion of the tubular member, a mesh portion extending beyond the tube and arranged at least partially at the rough surface;
- bringing, during said step of expanding the shaft, the rough surface into engagement with at least part of the exceeding portion of the outer mesh so as to trap the outer mesh between the rough surface and the inner surface of the bushing.

### Brief Description of the Figures

These and other features and advantages of the present invention will be more apparent from the ensuing description of preferred embodiments of the invention, provided merely by way of non-limiting example with reference to the annexed drawings, in which:
- Figure 1 is a cross-sectional view of the connection assembly according to the present invention, in use, i.e. in an assembled configuration;
- Figure 2 is a cross-sectional view of the connection assembly in Figure 1, in a non-assembled configuration;
- Figure 3 is a partially cross-sectional view of a connector of a connection device of the connection assembly in Figure 1;
- Figure 4 is a cross-sectional view of a step of the method according to the present invention for assembling the connection assembly in Figure 1.

### Description of Preferred Embodiments

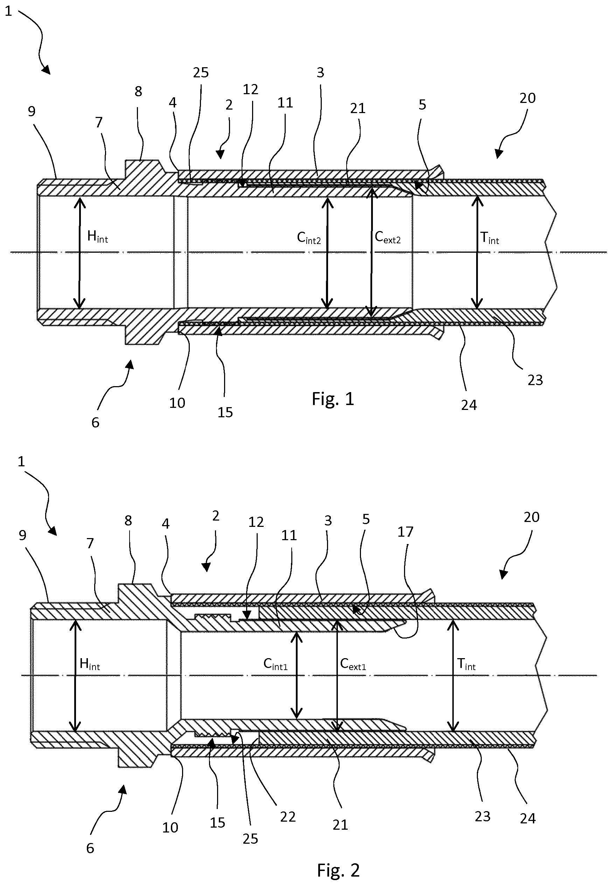

Referring to Figures 1 and 2, a connection assembly 1 according to the invention is illustrated, comprising a connection device 2 and a tubular member 20 to be connected; the assembly 1 is shown, in Figure 1, in use, i.e. in an assembled configuration, that is to say with the connection device 2 and the tubular member 20 connected to each other, and, in Figure 2, in a configuration prior to assembling.

The connection assembly 2 comprises a bushing 3 and a connector 6, preferably separate from the bushing 3, the connector 6 comprising a head 7 and a tubular shaped shaft 11, preferably integral with the head 7. Both the bushing 3 and the connector 6 are preferably made of metal.

The head 7 of the connector 6 comprises a working surface 8, of a known type, for example a hexagonal surface arranged to receive an outer working tool (not shown) and a fitting end 9, either male or female, suitably threaded, arranged to mate, in a known manner, with a corresponding fitting of an outer apparatus or plant (not shown). The head 7 further comprises an annular shoulder 10 arranged to receive in abutment therewith an end 4 of the bushing 3.

The shaft 11 of the connector 6 is adapted to be inserted into an end portion 21 of the tubular member 20, whereas the bushing 3 is adapted to be fitted outside the end portion 21 of the tubular member 20.

In the configuration prior to assembling (non-assembled configuration) of the connection assembly 1, and therefore upon insertion of the shaft 11 into the end portion 21 of the tubular member 20, the shaft 11 has an outer diameter Cₑₓₜ₁ smaller than or equal to, preferably slightly smaller than, an inner diameter Tint of the end portion 21 of the tubular member 20, so as to facilitate insertion of the shaft 11 into the tubular member 20. In use, i.e. in the assembled configuration, the shaft 11 is expanded, i.e. it has an outer diameter Cₑₓₜ₂ larger than the outer diameter Cₑₓₜ₁ in the non-assembled configuration, and the end portion 21 of the tubular member 20 is compressed between an outer surface 12 of the shaft 11 and an inner surface 5 of the bushing 3, thus establishing a fluid-tight connection.

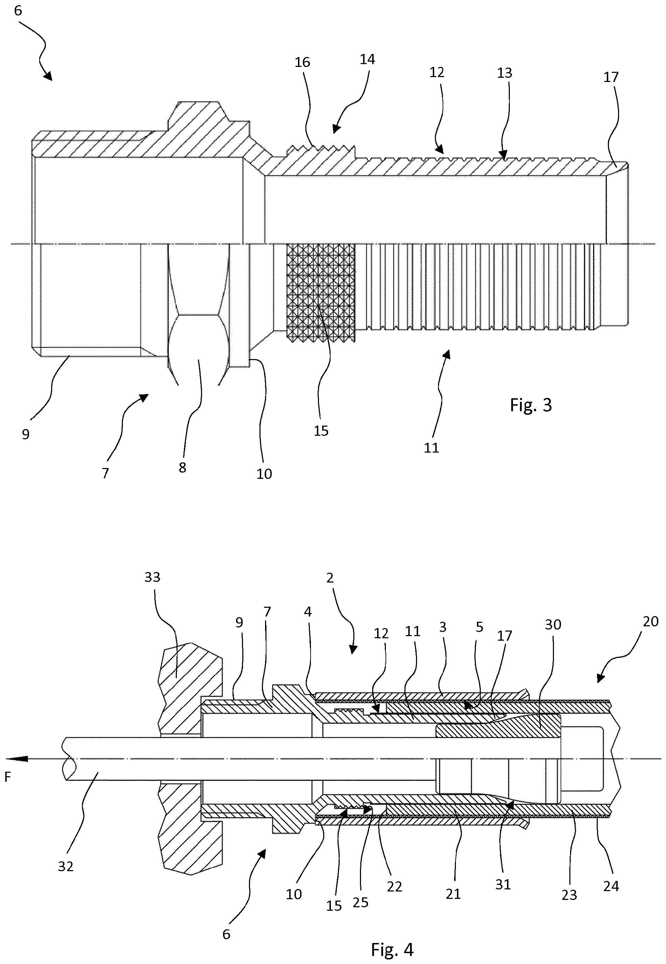

The outer surface 12 of the shaft 11 preferably comprises a plurality of radial grooves 13, shown in Figure 3, which, withstanding slipping of the tubular member 20, help to prevent it from slipping off the connection device 2.

In the assembled configuration, the shaft 11 preferably has an inner diameter Cᵢₙₜ₂ substantially equal to the inner diameter Tint of the end portion 21 of the tubular member 20 upon insertion, i.e. in the non-assembled configuration. Advantageously, this makes it possible not to limit the flow of fluid within the tubular member 20 to be connected at the connection assembly 1, this avoiding the drawback of having to use tubular members with greater cross-section to compensate for the reduction in the flow of fluid and thus making the solution according to the invention cheaper, lighter and more performing.

Preferably, the head 7 of the connector 6 has an inner diameter Hᵢₙₜ larger than or equal to the inner diameter Cᵢₙₜ₂ of the expanded shaft 11, i.e. in the assembled configuration. In other words, the inner diameter Hᵢₙₜ of the head 7 is larger than or equal to the inner diameter Tᵢₙₜ of the uncompressed end portion 21 (i.e. in the non-assembled configuration) of the tubular member 20.

The tubular member 20 preferably is a non-metallic flexible tube 23, for example made of a plastic material such as PTFE (Teflon), or of a thermoplastic material, surrounded by an outer mesh 24, preferably made of a metal material, for example stainless steel, or of a textile fiber, for example synthetic fibers such as kevlar or polyester. In addition, preferably, the end portion 21 of the tubular member 20 has, at its end 22, a portion 25 of mesh 24 of suitable length extending beyond the inner tube 23.

Preferably, the shaft 11 of the connector 6 comprises an outwardly oriented region 14, either integral with the shaft or attached thereto, which protrudes from the outer surface 12 of the shaft 11 and is provided with a suitably rough surface 15. The rough surface 15 is, a knurled region having a plurality of protrusions 16, for example having a pyramidal shape with sharp edges, as shown in Figure 3, adapted to fit, advantageously, into the voids of the exceeding mesh portion 25, so that the mesh 24 is trapped between the bushing 3 and the knurled portion 15 of the shaft 11, thus contributing to prevent the tubular member 20 from slipping off the connection device 2.

Preferably, the bushing 3 has a smooth surface, both inside and outside. More particularly, its inner surface 5 has no inward protrusions, this making manufacturing of the bushing 3 easier.

The shaft 11 of the connector 6 preferably has an end 17, distal relative to the head 7, tapered in the direction from the head 7 towards the end 17, for facilitating engagement thereof with a drawing tool 30, according to the method for assembling the connection assembly 1 as described here below.

Preferably, the drawing tool 30 has an outer surface 31 tapered in a direction opposite to the one of the end 17 of the shaft 11, from a section with a maximum diameter Dₘₐₓ to a section with a minimum diameter Dₘᵢₙ, so that upon engagement of the drawing tool 30 with the end 17 of the shaft 11 and during subsequent sliding relative to each other, contacts between sharp edges of the drawing tool 31 and of the end 17 are prevented or at least limited. In addition, preferably, the maximum diameter Dₘₐₓ of the drawing tool 30 is slightly smaller than the inner diameter Tᵢₙₜ of the end portion 21 of the tubular member 20 in the non-assembled configuration, so that the drawing tool 30 can slide therein, and the minimum diameter Dₘᵢₙ of the drawing tool 30 is slightly smaller than the inner diameter Cᵢₙₜ₁ of the shaft 11 in the non-assembled configuration, so that the drawing tool 30 can engage the shaft 11 by being partially inserted thereinto and thus, by sliding therein, can expand it until, owing to the section with maximum diameter Dₘₐₓ, the inner diameter Cᵢₙₜ₁ of the shaft 11 in the non-assembled configuration widens up to the inner diameter Cᵢₙₜ₂ of the assembled configuration. Preferably, the drawing tool 30 is further connected to a control rod 32, which, during assembling, is left protruding from the tubular member 20 for moving the drawing tool 30, as will be described here below.

Referring to Figure 4, a method for assembling the connection assembly 1 according to the invention is described here below.

At first, the bushing 3 is fitted around the end portion 21 of the tubular member 20 and the drawing tool 30 is inserted into said tubular member, from the side where the section of the drawing tool has the maximum diameter Dₘₐₓ and with the control rod 32 protruding from the tubular member 20 from the side of the end portion 21.

Subsequently, the shaft 11 of the connector 6 is inserted into the end portion 21 of the tubular member 20 and, preferably, an end 4 of the bushing 3 is brought into abutment against the annular shoulder 10 of the head 7 of the connector 6.

In a subsequent step, after having brought the head 7 into abutment against a suitable abutment element 33 that prevents the connector 6 from moving in a direction from the shaft 11 towards the head 7, the drawing tool 30 is made to slide from a starting position, shown in Figure 4, in which the section of the drawing tool 30 with the minimum diameter Dₘᵢₙ is at least partially within the shaft 11 of the connector 6, towards the head 7 of the connector 6, i.e. in the direction of the arrow F shown in Figure 4. This sliding of the drawing tool 30 causes an expansion, advantageously an axisymmetric expansion, of the shaft 11 of the connector 6 (inside expanding drawing), preferably until the inner diameter of the shaft 11 is substantially equal to the inner diameter Tint of the uncompressed end portion 21 of the tubular member 20. During this expansion of the shaft 11, its outer surface 12, pressing against the end portion 21 of the tubular member 20, compresses the same against the inner surface 5 of the bushing 3, so as to establish a tight-sealed connection between the tubular member 20 and the connection device 2.

The method described above makes it possible to assemble the connection assembly 1 in an easy, fast and cheap way. In addition, due to the fact that the expansion of the shaft 11 of the connector 6 and the consequent compression of the end portion 21 of the tubular member 20 are axisymmetric deformations, this ensures to obtain a connection assembly 1 in an assembled configuration which is more performing in terms of sealing between the connection assembly 2 and the tubular member 20 to be connected.

According to the invention, if the tubular member 20 is a tube 23 with the outer mesh 24 and the shaft 11 of the connector 6 comprises the region with the rough surface 15, the assembling method comprises the additional step of providing, at the end 22 of the end portion 21 of the tubular member 20, a portion 25 of mesh 24 extending beyond the inner tube 23 and arranged at least partially at the rough surface 15. In this way, during the expansion of the shaft 11 of the connector 6, as described above, the rough surface 15 of the shaft 11 engages with at least part of the exceeding portion 25 of mesh 24, so that the mesh 24 is trapped between the inner surface 5 of the bushing 3 and the rough surface 15 of the shaft 11, thus contributing to prevent the tubular member 20 from slipping off the connection device 2.

From the above description, it will be evident to the person skilled in the art that the connection assembly 1 and the method for assembling the connection assembly 1 according to the invention allow to effective attain the objects set forth above.

It will further be evident to the person skilled in the art that the embodiments as described and illustrated are in no way to be intended as limiting and that several variants and modifications are possible or in any case falling within the scope of protection of the present invention as defined in the appended claims.

## Claims

1. Tube connection assembly comprising a connection device (2) and a tubular member (20), wherein the connection device (2) comprises a bushing (3) and a connector (6) having a tubular shaped shaft (11) adapted to be inserted into an end portion (21) of the tubular member (20), the shaft (11) having, in a non-assembled configuration of the connection assembly (1), an outer diameter (Cₑₓₜ₁) smaller than or substantially equal to an inner diameter (Tᵢₙₜ) of the end portion (21) of the tubular member (20), wherein the shaft (11) is expanded, in an assembled configuration of the connection assembly (1), at the end portion (21) of the tubular member (20), said end portion (21) being compressed between an inner surface (5) of the bushing (3) and an outer surface (12) of the shaft (11), **characterized in that** the tubular member (20) is a tube (23) surrounded by an outer mesh (24), and
**in that** the shaft (11) includes a region (14) facing outwards of the shaft (11) and having a rough surface (15) adapted to engage a portion (25) of the outer mesh (24) extending beyond the tube (23), said rough surface (15) being a knurled region having a plurality of protrusions (16) adapted to fit into voids of the mesh portion (25) which extends beyond the tube (23), so that the mesh (24) is trapped between the bushing (3) and said knurled region.

2. Assembly according to claim 1, wherein the shaft (11) has, in the assembled configuration, an inner diameter (Cᵢₙₜ₂) substantially equal to the inner diameter (Tint) of the end portion (21) of the tubular member (20) in the non-assembled configuration.

3. Assembly according to any of the preceding claims, wherein the connector (6) comprises a head (7) having an inner diameter (Hᵢₙₜ) larger than or equal to the inner diameter (Tint) of the uncompressed end portion (21) of the tubular member (20).

4. Assembly according to any of the preceding claims, wherein the inner surface (5) of the bushing (3) has no inward protrusions.

5. Kit comprising a connection assembly (1) according to any of the claims 1 to 4 and a drawing tool (30) adapted to expand the shaft (11) of the connection assembly (1).

6. Method for assembling a connection assembly (1) comprising a connection device (2) and a tubular member (20) to be connected, wherein the connection device (2) comprises a bushing (3) and a connector (6) having a tubular shaped shaft (11), wherein the tubular member (20) is a tube (23) surrounded by an outer mesh (24) and wherein said shaft (11) includes a region (14) having a rough surface (15) provided with a knurled region having a plurality of protrusions (16), the method comprising the steps of:
- fitting the bushing (3) around an end portion (21) of the tubular member (20);
- inserting a drawing tool (30) into the tubular member (20);
- inserting a shaft (11) of the connector (6) into the end portion (21) of the tubular member (20), said shaft (11) having an outer diameter (Cₑₓₜ₁) smaller than or substantially equal to an inner diameter (Tᵢₙₜ) of the end portion (21) of the tubular member (20);
- providing, at an end (22) of the end portion (21) of the tubular member (20), a portion (25) of outer mesh (24) extending beyond the tube (23) and arranged at least partially at the rough surface (15);
- expanding, by sliding of the drawing tool (30) within the connector (6), the shaft (11) of the connector (6), thus causing compression of the end portion (21) of the tubular member (20) between an outer surface (12) of the shaft (11) and an inner surface (5) of the bushing (3);
- bringing, during said step of expanding the shaft (11), the rough surface (15) into engagement with at least part of said portion (25) of the outer mesh (24) extending beyond the tube (23) and fitting said protrusions (16) into voids of said mesh portion (25) so as to trap the outer mesh (24) between said knurled region and the inner surface (5) of the bushing (3).

7. Method according to claim 6, wherein said step of expanding the shaft (11) provides for expanding the shaft (11) until its inner diameter (Cᵢₜ₂) becomes substantially equal to the inner diameter (Tᵢₙₜ) of the uncompressed end portion (21) of the tubular member (20).

## Patentansprüche

1. Rohrverbindungsanordnung mit einer Verbindungsvorrichtung (2) und einem Rohrstück (20), wobei die Verbindungsvorrichtung (2) eine Hülse (3) und einen Verbinder (6) aufweist, der einen rohrförmigen Schaft (11) aufweist, der dafür ausgelegt ist, in einen Endabschnitt (21) des Rohrstücks (20) eingeführt zu werden, wobei der Schaft (11) in einer nicht-zusammengebauten Zustand der Verbindungsanordnung (1) einen äußeren Durchmesser (Cₑₓₜ₁) hat, der kleiner als oder im Wesentlichen gleich wie ein innerer Durchmesser (Tint) des Endabschnitts (21) des Rohrstücks (20) ist, wobei der Schaft (11) in einem zusammengebauten Zustand der Verbindungsanordnung (1) an dem Endabschnitt (21) des Rohrstücks (20) aufgeweitet ist, wobei der Endabschnitt (21) zwischen einer Innenfläche (5) der Hülse (3) und einer Außenfläche (12) des Schafts (11) verpresst ist,
**dadurch gekennzeichnet, dass** das Rohrstück (20) ein Rohr (23) ist, das von einem äußeren Netz (24) umgeben ist, und
dass der Schaft (11) einen Bereich (14) aufweist, der in Bezug auf den Schaft (11) nach außen zeigt und eine raue Oberfläche (15) hat, die dafür ausgelegt ist, einen Abschnitt (25) des äußeren Netzes (24) zu fassen, der sich außerhalb des Rohrs (23) erstreckt, wobei die raue Oberfläche (15) ein gerändelter Bereich ist, der mehrere Vorsprünge (16) hat, die dafür ausgelegt sind, in Lücken des Netzabschnitts (25) zu passen, der sich über das Rohr (23) hinaus erstreckt, so dass das Netz (24) zwischen der Hülse (3) und dem gerändelten Bereich gehalten ist.

2. Anordnung nach Anspruch 1, wobei der Schaft (11) im nicht zusammengebauten Zustand einen inneren Durchmesser (Cᵢₙₜ₂) hat, der im Wesentlichen dem inneren Durchmesser (Tint) des Endabschnitts (21) des Endabschnitts des Rohrstücks (20) in dem nicht-zusammengebauten Zustand gleicht.

3. Anordnung nach einem der vorstehenden Ansprüche, wobei der Verbinder (6) einen Kopf (7) aufweist, der einen inneren Durchmesser (Hᵢₙₜ) hat, der größer als oder gleich wie der innere Durchmesser (Tint) des unverpressten Endabschnitts (21) des Rohrstücks (20) ist.

4. Anordnung nach einem der vorstehenden Ansprüche, wobei die Innenfläche (5) der Hülse (3) keine nach innen gerichteten Vorsprünge hat.

5. Bausatz mit einer Verbindungsanordnung (1) nach einem der Ansprüche 1 bis 4 und einem Zugwerkzeug (30), das dafür ausgelegt ist, den Schaft (11) der Verbindungsanordnung (1) aufzuweiten.

6. Verfahren zum Zusammensetzen einer Verbindungsanordnung (1), mit einer Verbindungsvorrichtung (2) und einem zu verbindenden Rohrstück (20), wobei die Verbindungsvorrichtung (2) eine Hülse (3) und eine Verbinder (6), der einen rohrförmige Schaft (11) hat, aufweist, wobei das Rohrstück (20) ein Rohr (23) ist, das von einem äußeren Netz (24) umgeben ist, und wobei der Schaft (11) einen Bereich (14) aufweist, der eine raue Oberfläche (15) hat, die mit einem gerändelten Bereich versehen ist, der mehrere Vorsprünge (6) aufweist, wobei das Verfahren die folgenden Schritte aufweist:
- Aufsetzen der Hülse (3) um einen Endabschnitt (21) des Rohrstücks (20),
- Einsetzen eines Zugwerkzeugs (30) in das Rohrstück (20),
- Einsetzen des Schafts (11) des Verbinders (6) in den Endabschnitt (21) des Rohrstücks (20), wobei der Schaft (11) einen Außendurchmesser (Cₑₓₜ₁) hat, der kleiner als oder im Wesentlichen gleich groß wie ein Innendurchmesser (Tᵢₙₜ) des Endabschnitts (21) des Rohrstücks (20) ist,
- Bereitstellen eines Abschnitts (25) des äußeren Netzes (24), der sich über das Rohr (23) hinaus erstreckt und zumindest teilweise an der rauen Oberfläche (25) angeordnet ist, an einem Ende (22) des Endabschnitts (21) des Rohrstücks (20),
- Aufweiten des Schafts (11) des Verbinders (6) durch Verschieben des Zugwerkzeugs (30) in dem Verbinder (6), wodurch ein Verpressen des Endabschnitts (21) des Rohrstücks (20) zwischen einer Außenfläche (12) des Schafts (11) und einer Innenfläche (5) der Hülse (3) bewirkt wird,
- in Eingriff bringen der rauen Oberfläche (15) mit wenigstens einem Teil des Abschnitts (25) des äußeren Netzes (24), der sich über das Rohr (23) hinaus erstreckt, während des Schritts des Aufweitens des Schafts (11), und Einpassen der Vorsprünge (16) in Lücken des Netzabschnitts (25) so dass das äußere Netz (24) zwischen dem gerändelten Bereich und der Innenfläche (5) der Hülse (3) gehalten ist.

7. Verfahren nach Anspruch 6, wobei der Schritt des Aufweitens des Schafts (11) das Aufweiten des Schafts (11) vorsieht, bis dessen innerer Durchmesser (Cᵢₙₜ₂) im Wesentlichen gleich groß wie der innere Durchmesser (Tint) des unverpressten Endabschnitts (21) des Rohrstücks (20) ist.

## Revendications

1. Ensemble de raccordement de tubes comprenant un dispositif de raccordement (2) et un organe tubulaire (20), dans lequel le dispositif de raccordement (2) comprend un manchon (3) et un raccord (6) ayant un arbre (11) de forme tubulaire adapté pour être inséré dans une portion d'extrémité (21) de l'organe tubulaire (20), l'arbre (11) ayant, dans une configuration non assemblée de l'ensemble de raccordement (1), un diamètre externe (Cₑₓₜ₁) inférieur ou sensiblement égal à un diamètre interne (Tint) de la portion d'extrémité (21) de l'organe tubulaire (20), dans lequel l'arbre (11) est élargi, dans une configuration assemblée de l'ensemble de raccordement (1), au niveau de la portion d'extrémité (21) de l'organe tubulaire (20), ladite portion d'extrémité (21) étant comprimée entre une surface interne (5) du manchon (3) et une surface externe (12) de l'arbre (11),
**caractérisé en ce que** l'organe tubulaire (20) est un tube (23) entouré par un maillage externe (24), et
**en ce que** l'arbre (11) comporte une région (14) orientée vers l'extérieur de l'arbre (11) et ayant une surface rugueuse (15) adaptée pour engager une portion (25) du maillage externe (24) s'étendant au-delà du tube (23), ladite surface rugueuse (15) étant une région moletée ayant une pluralité de saillies (16) adaptées pour s'ajuster dans des vides de la portion de maillage (25) qui s'étend au-delà du tube (23), de sorte que le maillage (24) soit piégé entre le manchon (3) et ladite région moletée.

2. Ensemble selon la revendication 1, dans lequel l'arbre (11) a, dans la configuration assemblée, un diamètre interne (Cᵢₙₜ₂) sensiblement égal au diamètre interne (Tint) de la portion d'extrémité (21) de l'organe tubulaire (20) dans la configuration non assemblée.

3. Ensemble selon l'une quelconque des revendications précédentes, dans lequel le raccord (6) comprend une tête (7) ayant un diamètre interne (Hᵢₙₜ) supérieur ou égal au diamètre interne (Tᵢₙₜ) de la portion d'extrémité (21) non comprimée de l'organe tubulaire (20).

4. Ensemble selon l'une quelconque des revendications précédentes, dans lequel la surface interne (5) du manchon (3) n'a pas de saillies vers l'intérieur.

5. Nécessaire comprenant un ensemble de raccordement (1) selon l'une quelconque des revendications 1 à 4 et un outil d'étirage (30) adapté pour élargir l'arbre (11) de l'ensemble de raccordement (1).

6. Procédé d'assemblage d'un ensemble de raccordement (1) comprenant un dispositif de raccordement (2) et un organe tubulaire (20) à raccorder, dans lequel le dispositif de raccordement (2) comprend un manchon (3) et un raccord (6) ayant un arbre (11) de forme tubulaire, dans lequel l'organe tubulaire (20) est un tube (23) entouré par un maillage externe (24) et dans lequel ledit arbre (11) comporte une région (14) ayant une surface rugueuse (15) munie d'une région moletée ayant une pluralité de saillies (16), le procédé comprenant les étapes consistant à :
- ajuster le manchon (3) autour d'une portion d'extrémité (21) de l'organe tubulaire (20) ;
- insérer un outil d'étirage (30) dans l'organe tubulaire (20) ;
- insérer un arbre (11) du raccord (6) dans la portion d'extrémité (21) de l'organe tubulaire (20), ledit arbre (11) ayant un diamètre externe (Cₑₓₜ₁) inférieur ou sensiblement égal à un diamètre interne (Tint) de la portion d'extrémité (21) de l'organe tubulaire (20) ;
- fournir, au niveau d'une extrémité (22) de la portion d'extrémité (21) de l'organe tubulaire (20), une portion (25) de maillage externe (24) s'étendant au-delà du tube (23) et agencée au moins partiellement au niveau de la surface rugueuse (15) ;
- élargir, par glissement de l'outil d'étirage (30) au sein du raccord (6), l'arbre (11) du raccord (6), pour ainsi provoquer une compression de la portion d'extrémité (21) de l'organe tubulaire (20) entre une surface externe (12) de l'arbre (11) et une surface interne (5) du manchon (3) ;
- amener, pendant ladite étape d'élargissement de l'arbre (11), la surface rugueuse (15) en engagement avec au moins une partie de ladite portion (25) du maillage externe (24) s'étendant au-delà du tube (23) et ajuster lesdites saillies (16) dans des vides de ladite portion de maillage (25) de façon à piéger le maillage externe (24) entre ladite région moletée et la surface interne (5) du manchon (3).

7. Procédé selon la revendication 6, dans lequel ladite étape d'élargissement de l'arbre (11) assure l'élargissement de l'arbre (11) jusqu'à ce que son diamètre interne (Cᵢₙₜ₂) devienne sensiblement égal au diamètre interne (Tᵢₙₜ) de la portion d'extrémité (21) non comprimée de l'organe tubulaire (20).
